# EUROPÄISCHE PATENTSCHRIFT

(11) **EP 1 907 455 B1**
(45) Veröffentlichungstag und Bekanntmachung des Hinweises auf die Patenterteilung: **24.09.2008**
(21) Anmeldenummer: 05824269.4
(22) Anmeldetag: 28.12.2005
(51) Int. Cl.: C08J 5/00

(54) **VERFAHREN ZUM HERSTELLEN VON SCHWAMMGUMMIBÄLLEN UND NACH DIESEM VERFAHREN HERGESTELLTE SCHWAMMGUMMIBÄLLE**
METHOD FOR THE PRODUCTION OF CELLULAR RUBBER BALLS, AND CELLULAR RUBBER BALLS PRODUCED ACCORDING TO SAID METHOD
PROCEDE DE FABRICATION DE BOULES EN CAOUTCHOUC POREUX ET BOULES EN CAOUTCHOUC POREUX FABRIQUEES SELON LEDIT PROCEDE

(30) Priorität: 07.07.2005 DE 102005031911
(43) Veröffentlichungstag der Anmeldung: 09.04.2008
(73) Patentinhaber: Schmid Baukunststoffe GmbH, 73333 Gingen/Fils (DE)
(72) Erfinder: SCHMID, Oliver, 73333 Gingen/Vils (DE)
(74) Vertreter: Konle, Tilmar
(86) Internationale Anmeldenummer: PCT/EP2005/012847
(87) Internationale Veröffentlichungsnummer: WO 2007/006342

(56) Entgegenhaltungen:
- AT-B- 121 252
- DE-C- 488 737
- FR-A- 2 084 293

## Beschreibung

Die Erfindung bezieht sich auf ein Verfahren zum Herstellen von Schwammgummibällen sowie auf Schwammgummibälle, welche nach diesem Verfahren hergestellt sind.

Formteile aus Schwammgummi werden bekanntlich aus dem Vollen aus Schwammgummiblöcken ausgefräst, ausgeschnitten und/oder gestanzt.

Bei Schwammgummi handelt es sich um offenporigen Gummi, der durch Zumischen von Treibmittel zu einer Gummimasse aus natürlichem oder synthetischem Kautschuk mit anschliessendem Vulkanisieren gebildet wird.

Formteile aus Schwammgummi haben vielfältig Eigenschaften, welche ihren industriellen Einsatz wertvoll machen. Schwammgummi ist elastisch, flexibel, fest, abriebfest, wasseraufnahmefähig, in beliebigen Formen und Farben herstellbar, zuverlässig und hochwertig. Beispielsweise können Kugelformen mit verschiedenen Durchmessern als Rohrreinigungskugeln in Betonpumpen, Schankanlagen, Melkanlagen und Kraftwerken verwendet werden. Einsatzbeispiele für Zuschnitte aus Schwammgummi sind Reibebretter, Reinigungsmaschinen, Etikettiermaschinen, Auflagen für Laufbänder und Poliermaschinen, Volumenpumpen oder Hebegeräte.

Bei der Herstellung von derartigen Bällen bzw. Kugeln durch Fräsen, Ausschneiden und/oder Stanzen aus Schwammgummiblöcken fallen indessen zum Teil erhebliche Schwammgummiabfälle an.

Die Aufgabe der Erfindung besteht darin, ein Verfahren zu schaffen, welches die Herstellung von Schwammgummibällen praktisch ohne Schwammgummiabfälle ermöglicht.

Diese Aufgabe wird erfindungsgemäss durch die kennzeichnenden Merkmale des Anspruchs 1 gelöst.

Ein nach dem erfindungsgemässen Verfahren hergestellter Schwammgummiball ist in dem nebengeordneten Anspruch 8 angegeben.

Das erfindungsgemässe Verfahren geht von der Überlegung aus, dass es bei vielen Anwendungen von Schwammgummibällen genügt, wenn nur die Aussenschicht aus Schwammgummi besteht. Hierzu wird bei dem erfindungsgemässen Verfahren ein vorgefertigter Kugelkern aus Gummi oder Kunststoff verwendet, auf welchen eine dünne, profilierte Schwammgummischicht aufgeklebt wird. Die Profilierung der dünnen Schwammgummischicht entspricht einer Abwicklung der kugelförmigen Oberfläche des Kerns. Zum Verkleben der Schwammgummischicht mit dem Kugelkern kann beispielsweise ein Neopren-Kleber verwendet werden. Der Kugelkern des hergestellten Schwammgummiballs kann hohl ausgebildet sein, um dessen Gewicht zu verringern. Da es bei vielen Anwendungen von Schwammgummibällen, beispielsweise zum Reinigen von Rohren, nur auf deren Schwammgummi-Oberfläche ankommt, erfüllen die erfindungsgemäss hergestellten Schwammgummibälle denselben Zweck wie formgleiche, aus Schwammgummiblöcken gefräste Schwammgummibälle, die vollständig, also auch in ihrem Inneren, aus Schwammgummi bestehen.

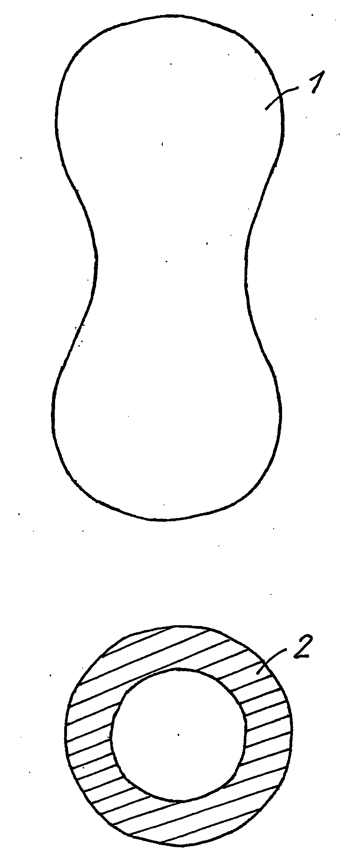

Die Erfindung wird nachstehend an Hand eines in den Zeichnungen dargestellten Ausführungsbeispiels näher erläutert. Die einzige Figur zeigt eine Draufsicht auf eine dünne Schwammgummischicht, welche auf einen hohlen Kugelkern aus Gummi oder Kunststoff aufgeklebt wird.

Die in der Draufsicht dargestellte Schwammgummischicht 1 weist ein etwa doppelkeulenförmiges Profil auf, welches der Abwicklung der kugelförmigen Oberfläche des herzustellenden Schwammgummiballs entspricht. Die Schwammgummischicht 1 wird auf einen Kugelkern 2 aufgeklebt, welcher aus Gummi oder aus Kunststoff besteht und im dargestellten Beispielsfalle hohl ausgebildet ist, um das Gewicht zu reduzieren. Als Kunststoffmaterial kommt beispielsweise ein thermoplastischer Kunststoff wie Polyvinychlorid oder Elastomere, wie beispielsweise Polyurethan, in Betracht. Alternativ kann der Kugelkern auch als Vollkern ausgebildet sein, wobei in diesem Falle als Material für den Kugelkern 2 ein Schaumkunststoff, beispielsweise geschäumtes Polyurethan, vorgesehen werden kann. Als Kleber zum Verkleben der Schwammgummischicht 1 auf dem Kugelkern 2 kommt beispielsweise ein Neoprenkleber, ein Gummikleber oder ein geeigneter Kunststoffkleber in Betracht. Im aufgeklebten Zustand bedeckt die dünne Schwammgummischicht 1 die gesamte Oberfläche des Kugelkerns 2, wobei an der Aussenkontur der Schwammgummischicht 1 eine Klebenaht vorhanden ist. Im Ergebnis wird um den Kugelkern 2 eine offenporige Aussenschicht aus Schwammgummi gebildet.

Die dünne Schwammgummischicht 1 kann durch Ausstanzen oder Ausschneiden aus einer Schwammgummimatte hergestellt werden. Der dabei entstehende Abfall ist im Vergleich zu dem Ausfräsen von Schwammgummibällen aus Blöcken minimal. Damit verringern sich insgesamt die Herstellungskosten eines erfindungsgemässen Schwammgummiballs auf einen Bruchteil der zum Ausfräsen aus Blöcken erforderlichen Kosten.

## Patentansprüche

1. Verfahren zum Herstellen von Schwammgummibällen, **dadurch gekennzeichnet, dass** auf einen Kugelkern (2) aus Gummi oder Kunststoff eine dünne Schwammgummischicht (1) aufgeklebt wird, deren Profil einer Abwicklung der Oberfläche des Kugelkerns (2) entspricht.

2. Verfahren nach Anspruch 1, **dadurch gekennzeichnet, dass** als Kleber zum Aufkleben der dünnen Schwammgummischicht (1) auf den Kugelkern (2) ein Neoprenkleber oder ein Gummikleber verwendet wird.

3. Verfahren nach Anspruch 1 oder 2, **dadurch gekennzeichnet, dass** als Kunststoffmaterial für den Kugelkern (2) ein Elastomer, wie beispielsweise Polyurethan, verwendet wird.

4. Verfahren nach Anspruch 1 oder 2, **dadurch gekennzeichnet, dass** als Kunststoffmaterial für den Kugelkern (2) ein thermoplastischer Kunststoff, beispielsweise Polyvinylchlorid, verwendet wird.

5. Verfahren nach Anspruch 1 oder 2, **dadurch gekennzeichnet, dass** als Kunststoffmaterial für den Kugelkern (2) ein Schaumkunststoff, beispielsweise geschäumtes Polyurethan, verwendet wird.

6. Verfahren nach einem der Ansprüche 1 bis 5, **dadurch gekennzeichnet, dass** der Kugelkern (2) hohl ausgebildet ist.

7. Verfahren nach einem der Ansprüche 1 bis 5, **dadurch gekennzeichnet, dass** als Kugelkern (2) ein Vollkern vorgesehen ist.

8. Schwammgummiball, **dadurch gekennzeichnet, dass** auf einen Kugelkern (2) aus Gummi oder Kunststoff eine dünne Schwammgummischicht (1) aufgeklebt ist, deren Profil einer Abwicklung der Oberfläche des Kugelkerns (2) entspricht.

9. Schwammgummiball nach Anspruch 8, **dadurch gekennzeichnet, dass** als Kleber zum Aufkleben der dünnen Schwammgummischicht (1) auf den Kugelkern (2) ein Neoprenkleber oder ein Gummikleber verwendet wird.

10. Schwammgummiball nach Anspruch 8 oder 9, **dadurch gekennzeichnet, dass** als Kunststoffmaterial für den Kugelkern (2) ein Elastomer, wie beispielsweise Polyurethan, vorgesehen ist.

11. Schwammgummiball nach Anspruch 8 oder 9, **dadurch gekennzeichnet, dass** als Kunststoffmaterial für den Kugelkern (2) ein thermoplastischer Kunststoff, beispielsweise Polyvinylchlorid, vorgesehen ist.

12. Schwammgummiball nach Anspruch 8 oder 9, **dadurch gekennzeichnet, dass** als Kunststoffmaterial für den Kugelkern (2) ein Schaumkunststoff, beispielsweise geschäumtes Polyurethan, vorgesehen ist.

13. Schwammgummiball nach einem der Ansprüche 8 bis 12, **dadurch gekennzeichnet, dass** der Kugelkern (2) hohl ausgebildet ist.

14. Schwammgummiball nach einem der Ansprüche 8 bis 12, **dadurch gekennzeichnet, dass** als Kugelkern (2) ein Vollkern vorgesehen ist.

## Claims

1. A method for manufacturing cellular rubber balls, **characterized in that** a thin cellular rubber layer (1) is adhered to a ball core (2) made of rubber or plastic, the profile of the layer (1) corresponding to a surface wrapping of the ball core (2).

2. A method according to claim 1, **characterized in that** a neoprene adhesive or rubber adhesive is used as an adhesive for adhesive bonding of the thin cellular rubber layer (1) to the ball core (2).

3. A method according to claim 1 or 2, **characterized in that** an elastomer such as polyurethane is used as a plastic material for the ball core (2).

4. A method according to claim 1 or 2, **characterized in that** a thermoplastic plastic such as polyvinyl chloride is used as a plastic material for the ball core (2).

5. A method according to claim 1 or 2, **characterized in that** a cellular plastic such as foamed polyurethane is used as a plastic material for the ball core (2).

6. A method according to one of the claims 1 to 5, **characterized in that** the ball core (2) is hollow.

7. A method according to one of the claims 1 to 5, **characterized in that** a solid core is provided as the ball core (2).

8. A cellular rubber ball, **characterized in that** a thin cellular rubber layer (1) is adhered to a ball core (2) made of rubber or plastic, the profile of the layer (1) corresponding to a surface wrapping of the ball core (2).

9. A cellular rubber ball according to claim 8, **characterized in that** a neoprene adhesive or rubber adhesive is used as an adhesive for adhesive bonding of the thin cellular rubber layer (1) to the ball core (2).

10. A cellular rubber ball according to claim 8 or 9, **characterized in that** an elastomer such as polyurethane is provided as a plastic material for the ball core (2).

11. A cellular rubber ball according to claim 8 or 9, **characterized in that** a thermoplastic plastic such as polyvinyl chloride is provided as a plastic material for the ball core (2).

12. A cellular rubber ball according to claim 8 or 9, **characterized in that** a cellular plastic such as foamed polyurethane is provided as a plastic material for the ball core (2).

13. A cellular rubber ball according to one of the claims 8 to 12, **characterized in that** the ball core (2) is hollow.

14. A cellular rubber ball according to one of the claims 8 to 12, **characterized in that** a solid core is provided as the ball core (2).

## Revendications

1. Procédé de fabrication de balles en caoutchouc spongieux, **caractérisé en ce qu'**une fine couche de caoutchouc spongieux (1) est collée sur un noyau rond (2) en caoutchouc ou en plastique et dont le profil correspond à l'enveloppe de la surface du noyau rond (2).

2. Procédé selon la revendication 1, **caractérisé en ce qu'**une colle néoprène ou une colle caoutchouteuse est utilisée pour coller la fine couche de caoutchouc spongieux (1) sur le noyau rond (2).

3. Procédé selon la revendication 1 ou 2, **caractérisé en ce qu'**un élastomère, comme par exemple du polyuréthane, est utilisé comme matière plastique pour le noyau rond (2)

4. Procédé selon la revendication 1 ou 2, **caractérisé en ce qu'**un plastique thermoplastique, comme par exemple le chlorure polyvinylique, est utilisé comme matériau plastique pour le noyau rond (2).

5. Procédé selon la revendication 1 ou 2, **caractérisé en ce qu'**un plastique cellulaire, comme par exemple le polyuréthane cellulaire, est utilisé comme matériau plastique pour le noyau rond (2)

6. Procédé selon l'une des revendications 1 à 5, **caractérisé en ce que** le noyau rond (2) est creux.

7. Procédé selon l'une des revendications 1 à 5, **caractérisé en ce qu'**un noyau plein est prévu comme noyau rond (2).

8. Balle en caoutchouc spongieux, **caractérisée en ce que** sur un noyau rond (2) en caoutchouc ou en plastique est collée une fine couche de caoutchouc spongieux (1), dont le profil correspond à l'enveloppe de la surface du noyau rond (2).

9. Balle en caoutchouc spongieux selon la revendication 8, **caractérisée en ce que** comme colle servant à coller la fine couche de caoutchouc spongieux (1) sur le noyau rond (2), on utilise une colle néoprène ou une colle caoutchouteuse.

10. Balle en caoutchouc spongieux selon la revendication 8 ou 9, **caractérisée en ce qu'**un élastomère, comme par exemple du polyuréthane, est prévu comme matériau plastique pour le noyau rond (2)

11. Balle en caoutchouc spongieux selon la revendication 8 ou 9, **caractérisée en ce qu'**un plastique thermoplastique, comme par exemple du chlorure polyvinylique, est prévu comme matériau plastique pour le noyau rond (2).

12. Balle en caoutchouc spongieux selon la revendication 8 ou 9, **caractérisée en ce qu'**un plastique cellulaire, comme par exemple du polyuréthane cellulaire, est prévu comme matériau plastique pour le noyau rond (2).

13. Balle en caoutchouc spongieux selon l'une des revendications 8 à 12, **caractérisée en ce que** le noyau rond (2) est creux

14. Balle en caoutchouc spongieux selon l'une des revendications 8 à 12, **caractérisée en ce qu'**un noyau plein est prévu comme noyau rond (2)
